# EUROPÄISCHE PATENTSCHRIFT

(11) **EP 4 289 239 B1**
(45) Veröffentlichungstag und Bekanntmachung des Hinweises auf die Patenterteilung: **28.10.2026**
(21) Anmeldenummer: 23168781.5
(22) Anmeldetag: 19.04.2023
(51) Int. Cl.: A01B 63/108

(54) **LANDWIRTSCHAFTLICHE ARBEITSMASCHINE MIT HÖHENPOSITIONIERBAREN ANBAUGERÄTEN**
AGRICULTURAL MACHINE WITH ATTACHMENTS THAT CAN BE POSITIONED IN HEIGHT
MACHINE DE TRAVAIL AGRICOLE DOTÉE D'OUTILS RAPPORTÉS RÉGLABLE EN HAUTEUR

(30) Priorität: 08.06.2022 DE 102022114412
(43) Veröffentlichungstag der Anmeldung: 13.12.2023
(73) Patentinhaber: CLAAS E-Systems GmbH, 49201 Dissen (DE)
(72) Erfinder: Anke, Kai, 33824 Werther (DE)
(74) Vertreter: CLAAS Gruppe

(56) Entgegenhaltungen:
- EP-A1- 4 162 787
- WO-A1-2008/046958
- CN-B- 108 718 661
- DE-A1- 102019 104 953
- KR-A- 20210 041 982
- US-A1- 2019 075 720

## Beschreibung

Die vorliegende Erfindung betrifft eine landwirtschaftliche Arbeitsmaschine, insbesondere einen Traktor, mit wenigstens einem höhenpositionierbaren Anbaugerät als auch ein Verfahren zur Höhenpositionierung dieses Anbaugerätes.

Aus der DE 10 2019 104 953 A1 ist ein Feldhäcksler bekannt, der eine Steuerungseinrichtung aufweist, mittels der ein vorderes Hauptrad automatisch in Abhängigkeit eines Lenkwinkels des Feldhäckslers auslösbar ist. Insbesondere kann der Lenkwinkel in Abhängigkeit einer Stellung eines Lenkrades des Feldhäckslers gemessen werden. Unter einem "Lenkrad" wird im Sinne der DE 10 2019 104 953 A1 mindestens ein Rad des Feldhäckslers verstanden, mittels dessen letzterer auf dem Arbeitsfeld in eine Kurvenfahrt zwingbar ist. Typischerweise sind die beiden an der jeweiligen Hinterachse des Feldhäckslers angeordneten Räder, die in aller Regel in Form typischer Rundreifen ausgeführt sind, als Lenkräder ausgebildet, die um eine zumindest im Wesentlichen vertikale Lenkachse relativ zu dem übrigen Feldhäcksler verschwenkbar sind.

Aus der KR 2021 0041982 A sowie der CN 108 718 661 B sind weiterhin Mähdrescher mit Vorsatzgeräten bekannt, welche bei Kurvenfahrten im Vorgewende verstellbar sind.

Wird mit einer Fronthydraulik eines Traktors ein Anbaugerät zur Bearbeitung eines landwirtschaftlichen Feldes im abgesenkten Zustand geführt (z.B. Frontpacker bei der Aussaat auf gepflügtem Ackerland in Schwimmstellung), so ist das Lenken des Traktors bei einer Kurvenfahrt problematisch. Je schärfer eine Kurve gefahren werden muss, desto höher muss das Frontanbaugerät (z.B. Frontpacker) angehoben werden, da sonst die erforderliche Kurvenfahrt nicht durchgeführt werden kann. Dieser Vorgang muss aktuell manuell durch den Fahrer über die Bedienung der Fronthydraulik erfolgen.

Der vorliegenden Erfindung liegt die Aufgabe zugrunde, eine verbesserte oder zumindest eine alternative Ausführungsform einer landwirtschaftlichen Arbeitsmaschine, insbesondere eines Traktors, anzugeben, wobei insbesondere eine verbesserte Lenkung der landwirtschaftlichen Arbeitsmaschine ermöglicht wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass eine Höhenpositionierung des Anbaugerätes in Abhängigkeit einer Lenkstellung der Lenkvorrichtung erfolgt.

Die erfindungsgemäße landwirtschaftliche Arbeitsmaschine, die insbesondere ein Traktor ist, weist wenigstens ein Anbaugerät zur Bearbeitung eines landwirtschaftlichen Feldes auf. Mit anderen Worten ausgedrückt, wird ein Anbaugerät mittels der landwirtschaftlichen Arbeitsmaschine genutzt, um auf das landwirtschaftliche Feld, insbesondere den Boden des landwirtschaftlichen Feldes, zu bearbeiten. Das Anbaugerät kann beispielsweise ein Frontpacker sein, der beispielsweise bei einer Aussaat auf gepflügtem Ackerland in einer Schwimmstellung eingesetzt wird.

Die landwirtschaftliche Arbeitsmaschine kann zwei Fronträder und/oder auch zwei Hinterräder aufweisen, wobei die Fronträder drehbar bezüglich einer frontseitigen Drehachse gelagert sind und sich während einer Fahrt landwirtschaftlichen Arbeitsmaschine um diese frontseitige Drehachse drehen, während die Hinterräder drehbar bezüglich einer hinterseitigen Drehachse gelagert sind und sich während einer Fahrt landwirtschaftlichen Arbeitsmaschine um diese hinterseitige Drehachse drehen. Die Fronträder und/oder die Hinterräder können jeweils als Rundreifen ausgebildet sein. Die Fronträder und/oder die Hinterräder können jeweils als Lenkräder ausgebildet sein, die um eine zumindest im Wesentlichen vertikale Lenkachse relativ zu den übrigen Komponenten und/oder Bauteilen der landwirtschaftlichen Arbeitsmaschine verschwenkbar sind.

Die landwirtschaftliche Arbeitsmaschine weist ein Fronthubwerk zur Höhenpositionierung des Anbaugerätes bezüglich des landwirtschaftlichen Feldes auf. Das Fronthubwerk kann als hydraulisches Fronthubwerk ausgebildet sein. Dieses hydraulische Fronthubwerk kann als hydraulischer Dreipunkt-Kraftheber ausgebildet sein und wenigstens einen Hydraulikzylinder, insbesondere wenigstens zwei Hydraulikzylinder, aufweisen. Das Fronthubwerk, insbesondere die Hydraulikzylinder des Fronthubwerkes, kann frontseitig bezüglich der frontseitigen Drehachse der Fronträder der landwirtschaftlichen Arbeitsmaschine angeordnet sein.

Die landwirtschaftliche Arbeitsmaschine weist eine Lenkvorrichtung zur Fahrtrichtungslenkung der landwirtschaftlichen Arbeitsmaschine auf. Diese Lenkvorrichtung kann in einer Fahrerkabine der landwirtschaftlichen Arbeitsmaschine angeordnet sein, mit der eine Lenkstellung durch einen Fahrer der landwirtschaftlichen Arbeitsmaschine bewirkt werden kann. Die landwirtschaftliche Arbeitsmaschine kann derart ausgebildet und/oder programmiert sein, dass in Abhängigkeit der Lenkeinstellung der Lenkvorrichtung wenigstens ein oder mehrere Lenkräder der landwirtschaftlichen Arbeitsmaschine, um eine zumindest im Wesentlichen vertikale Lenkachse relativ zu den übrigen Komponenten und/oder Bauteilen der landwirtschaftlichen Arbeitsmaschine verschränkt wird.

Die erfindungsgemäße landwirtschaftliche Arbeitsmaschine ist zur Höhenpositionierung des Anbaugerätes mittels des Fronthubwerks in Abhängigkeit einer Lenkstellung der Lenkvorrichtung ausgebildet und/oder programmiert. Dies hat beispielsweise den Vorteil, dass das Anbaugerät bei einer Kurvenfahrt, also einer nicht geradlinig-förmigen Fahrt, in automatisierter Form von der landwirtschaftlichen Fläche beabstandet wird, sodass der Kurvenradius nicht nachteilig aufgrund der mechanischen Wechselwirkung des Anbaugerätes mit der landwirtschaftlichen Fläche vergrößert wird. Dies hat beispielsweise auch den Vorteil, dass die landwirtschaftliche Arbeitsmaschine unabhängig von der Aufmerksamkeit des Fahrers stets eine Kurvenfahrt mit einem optimalen Kurvenradius, insbesondere einem möglichst kleinen Kurvenradius, ermöglicht.

Bei einer vorteilhaften Weiterbildung der erfindungsgemäßen Lösung ist vorgesehen, dass die landwirtschaftliche Arbeitsmaschine wenigstens eine Steuervorrichtung zur Steuerung und/oder Regelung des Fronthubwerks und wenigstens eine Sensorvorrichtung zur Erfassung der Lenkstellung der Lenkvorrichtung aufweist. Die Steuervorrichtung kann kommunizierend mit der Sensorvorrichtung und kommunizierend mit dem Fronthubwerk verbunden sein.

Vorzugsweise kann sich der Begriff "Steuervorrichtung" auf eine Elektronikschaltung (z. B. mit Mikroprozessor(en) und Datenspeicher(n)) und/oder eine mechanische Steuerung und/oder eine hydraulische Steuerung beziehen, die je nach Ausbildung Steuerungsaufgaben und/oder Regelungsaufgaben übernehmen und/oder ausführen kann. Auch wenn hierin der Begriff "Steuern" verwendet wird, kann damit gleichsam zweckmäßig auch "Regeln" bzw. "Steuern mit Rückkopplung" umfasst sein.

Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Ferner können diese miteinander kommunizierend verbundenen Komponenten eine kabelgebundene und/oder drahtlose Datenverbindung ausbilden.

Die Sensorvorrichtung ist zur Erfassung der Lenkstellung der Lenkvorrichtung ausgebildet und/oder programmiert, wobei die Steuervorrichtung zur Steuerung und/oder Regelung der Höhenpositionierung des Anbaugerätes mittels des Fronthubwerks in Abhängigkeit der von der Sensorvorrichtung erfassten Lenkstellung der Lenkvorrichtung ausgebildet und/oder programmiert ist.

Die Sensorvorrichtung zur Erfassung der Lenkstellung der Lenkvorrichtung kann beispielsweise an der Lenkvorrichtung an sich einen Sensor aufweisen und/oder jeweils wenigstens einen Sensor an einem Frontrad und/oder einem Hinterrad aufweisen.

Bei einer vorteilhaften Weiterbildung der erfindungsgemäßen Lösung ist vorgesehen, dass die Sensorvorrichtung dazu ausgebildet und/oder programmiert ist, die Lenkstellung der Lenkvorrichtung in Form eines Lenkwinkels zu ermitteln. Hierbei kann vorgesehen sein, dass der Lenkwinkel bei einer Geradeausfahrt der landwirtschaftlichen Arbeitsmaschine 0° beträgt, während bei einer Fahrt durch eine nicht gerade Strecke, also eine Kurve, dieser Lenkwinkel ungleich 0° ist. Hierbei kann es vorgesehen sein, dass unabhängig von der Richtung der Kurve der Lenkwinkel stets positiv und stets ungleich 0° ist.

Bei einer vorteilhaften Weiterbildung der erfindungsgemäßen Lösung ist vorgesehen, dass die Steuervorrichtung dazu ausgebildet und/oder programmiert ist, in Abhängigkeit der von der Sensorvorrichtung erfassten Lenkstellung der Lenkvorrichtung wenigstens abschnittweise mittels wenigstens einer Funktion eine einzustellende Höhenposition des Anbaugerätes zu ermitteln und das Fronthubwerk in Abhängigkeit dieser ermittelten Höhenposition derart ansteuern und/oder regeln, dass das Anbaugerät die ermittelte Höhenposition einnimmt. Hier kann unter abschnittweise zu verstehen sein, dass eine Funktion für einen bestimmten Lenkstellungsbereich, insbesondere Lenkwinkelbereich, von der Steuervorrichtung verwendet wird. Es kann jedoch auch vorgesehen sein, dass für den vollständigen Lenkstellungsbereich, insbesondere Lenkwinkelbereich, von der Steuervorrichtung lediglich eine Funktion, insbesondere eine lineare Funktion, verwendet wird.

Bei einer vorteilhaften Weiterbildung der erfindungsgemäßen Lösung ist vorgesehen, dass wenigstens eine Funktion eine lineare Funktion mit einer Steigung ist. Hierbei kann die Steigung der linearen Funktion von der Art des Anbaugerätes und/oder der Art der landwirtschaftlichen Arbeitsmaschine und/oder der Art des landwirtschaftlichen Feldes abhängig ist.

Eine lineare Funktion zur Ermittlung der einzustellenden Höhenposition h des Anbaugerätes $h \left(\left|α\right|\right) = m ∗ \left|α\right| + n$ kann von der erfassten Lenkstellung, insbesondere dem erfassten Lenkwinkel α, einer Steigung m und einem Offset n abhängen. Hierbei können insbesondere die Steigung m und der Offset *n* von der Art des Anbaugerätes und/oder der Art der Landwirtschaftliche Arbeitsmaschine und/oder der Art des landwirtschaftlichen Feldes abhängig sein.

Bei einer vorteilhaften Weiterbildung der erfindungsgemäßen Lösung ist vorgesehen, dass die wenigstens eine Funktion eine erste lineare Funktion mit einer ersten Steigung und eine zweite lineare Funktion mit einer zweiten Steigung aufweist, wobei die erste Steigung ungleich der zweiten Steigung ist, wobei bei einer erfassten Lenkstellung, insbesondere einem erfassten Lenkwinkel, der Lenkvorrichtung, die kleiner ist als ein Grenzwert, die erste lineare Funktion zur Ermittlung der einzustellenden Höhenposition des Anbaugerätes verwendet wird. Die erste Steigung kann größer sein als die zweite Steigung. Bei einer erfassten Lenkstellung, insbesondere einem erfassten Lenkwinkel, der Lenkvorrichtung, die gleich und/oder oberhalb des Grenzwertes ist, wird die zweite lineare Funktion zur Ermittlung der einzustellenden Höhenposition des Anbaugerätes verwendet. Dies hat den Vorteil, dass für unterschiedliche Lenkstellung, insbesondere Lenkwinkel, unterschiedliche Anpassungen und/oder Veränderungen der einzustellenden Höhenposition des Anbaugerätes erzielt werden können.

Bei einer vorteilhaften Weiterbildung der erfindungsgemäßen Lösung ist vorgesehen, dass die Steuervorrichtung dazu ausgebildet und/oder programmiert ist, dass bei einer erfassten Lenkstellung der Lenkvorrichtung, die kleiner als ein Toleranzwert ist, die Höhenposition des Anbaugerätes konstant gehalten wird. Dies hat beispielweise den Vorteil, dass eine Änderung der Höhenposition des Anbaugerätes auf einem schrägverlaufenden landwirtschaftlichen Feld bei einer Gegenlenkung, um eine Geradeausfahrt zu erwirken, keine unerwünschte Änderung der Höhenposition des Anbaugerätes erfolgt.

Bei einer vorteilhaften Weiterbildung der erfindungsgemäßen Lösung ist vorgesehen, dass der Toleranzwert ungleich und kleiner als der Grenzwert ist. Der Toleranzwert kann beispielsweise 5° sein. Der Toleranzwert kann von der Art des Anbaugerätes und/oder der Art der Landwirtschaftliche Arbeitsmaschine und/oder der Art des landwirtschaftlichen Feldes abhängig sein.

Bei einer vorteilhaften Weiterbildung der erfindungsgemäßen Lösung ist vorgesehen, dass die Steuervorrichtung dazu ausgebildet und/oder programmiert ist, dass wenigstens die eine Funktion, insbesondere wenigstens die Steigung einer linearen Funktion, und/oder der Grenzwert und/oder der Toleranzwert, einstellbar ist. Dies hat den Vorteil, dass die Funktion bzw. die Höhenposition des Anbaugerätes gemäß der landwirtschaftlichen Situation angepasst werden kann.

Bei einer vorteilhaften Weiterbildung der erfindungsgemäßen Lösung ist vorgesehen, dass die landwirtschaftliche Arbeitsmaschine eine Einstellvorrichtung zur Einstellung der wenigstens einen Funktion, insbesondere der Steigung der wenigstens einen linearen Funktion, und/oder des Grenzwertes und/oder des Toleranzwertes aufweist. Die Einstellvorrichtung kann innerhalb der landwirtschaftlichen Arbeitsmaschine, insbesondere der Fahrerkabine der landwirtschaftlichen Arbeitsmaschine, angeordnet sein.

Bei einer vorteilhaften Weiterbildung der erfindungsgemäßen Lösung ist vorgesehen, dass die Einstellvorrichtung Einstellungselemente aufweist, die ein Fahrer der landwirtschaftlichen Arbeitsmaschine betätigen kann, um die Einstellung der wenigstens einen Funktion, insbesondere die Steigung der wenigstens einen linearen Funktion, und/oder des Grenzwertes und/oder des Toleranzwertes durchzuführen.

Bei einer vorteilhaften Weiterbildung der erfindungsgemäßen Lösung ist vorgesehen, dass die Einstellvorrichtung dazu ausgebildet und/oder programmiert ist, eine kommunizierende Verbindung mit einer außerhalb der landwirtschaftliche Arbeitsmaschine ausgebildeten Vorrichtung zu bewirken, wobei die außerhalb der landwirtschaftliche Arbeitsmaschine ausgebildete Vorrichtung zur Einstellung der wenigstens einen Funktion, insbesondere der Steigung wenigstens einer linearen Funktion, und/oder des Grenzwertes und/oder des Toleranzwertes ausgebildet und/oder programmiert ist. So kann beispielweise durch einen externen, insbesondere weit bezüglich der landwirtschaftlichen Arbeitsmaschine entfernten, Servicetechniker eine Einstellung der wenigstens einen Funktion, insbesondere der Steigung wenigstens einer linearen Funktion, und/oder des Grenzwertes und/oder des Toleranzwertes bewirkt werden.

Erfindungsgemäß ist vorgesehen, dass die landwirtschaftliche Arbeitsmaschine wenigstens ein heckseitiges Anbaugerät zur Bearbeitung des landwirtschaftlichen Feldes und wenigstens ein Heckhubwerk zur Höhenpositionierung des wenigstens einen heckseitigen Anbaugerätes bezüglich des landwirtschaftlichen Feldes aufweist, wobei die landwirtschaftliche Arbeitsmaschine zur Höhenpositionierung des wenigstens einen heckseitigen Anbaugerätes mittels des Heckhubwerks in Abhängigkeit der Lenkstellung der Lenkvorrichtung ausgebildet und/oder programmiert ist.

Das Heckhubwerk kann als hydraulisches Heckhubwerk ausgebildet sein. Dieses hydraulische Heckhubwerk kann als hydraulischer Dreipunkt-Kraftheber ausgebildet sein und wenigstens einen Hydraulikzylinder, insbesondere wenigstens zwei Hydraulikzylinder, aufweisen. Das Heckhubwerk, insbesondere die Hydraulikzylinder des Heckhubwerkes, kann heckseitig bezüglich der hinterseitigen Drehachse der Hinterräder der landwirtschaftlichen Arbeitsmaschine angeordnet sein.

Ferner betrifft die Erfindung ein Verfahren zur Höhenpositionierung eines Anbaugerätes der erfindungsgemäßen landwirtschaftlichen Arbeitsmaschine, wobei die Höhenpositionierung des Anbaugerätes mittels des Fronthubwerks in Abhängigkeit der Lenkstellung der Lenkvorrichtung durchgeführt wird. Dieses Verfahren kann als computerimplementiertes Verfahren ausgebildet sein. Das Verfahren kann durch die Steuervorrichtung der landwirtschaftlichen Arbeitsmaschine ausgeführt werden.

Erfindungsgemäß ist vorgesehen, dass die Höhenpositionierung eines heckseitigen Anbaugerätes mittels eines Heckhubwerks in Abhängigkeit der Lenkstellung der Lenkvorrichtung durchgeführt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße landwirtschaftliche Arbeitsmaschine während einer Geradeausfahrt, und
- Fig. 2: die landwirtschaftliche Arbeitsmaschine während eines Vorgewendes, und
- Fig. 3: die landwirtschaftliche Arbeitsmaschine der Fig. 2 in einer Seitenansicht, und
- Fig. 4: eine schematische Darstellung einer Höhenänderung eines Anbaugerätes in Abhängigkeit eines Lenkwinkels der landwirtschaftlichen Arbeitsmaschine, und
- Fig. 5: einen schematischen und exemplarischen Schaltplan der landwirtschaftlichen Arbeitsmaschine.

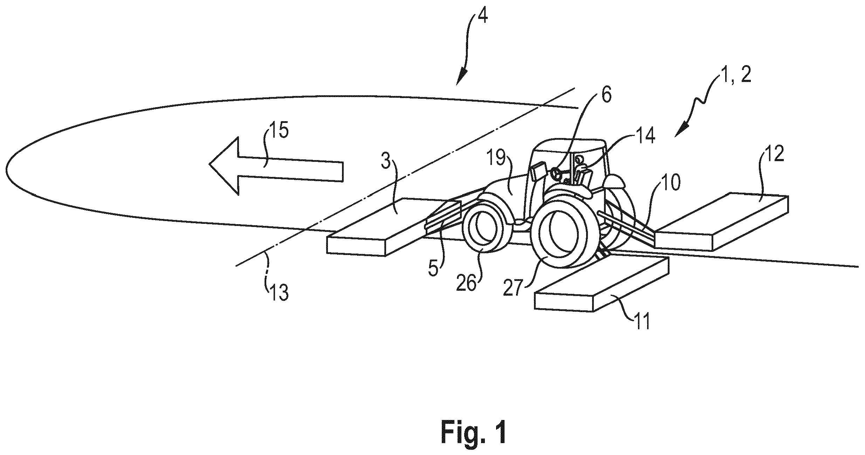

Fig. 1 zeigt eine erfindungsgemäße landwirtschaftliche Arbeitsmaschine 1, insbesondere einen Traktor 2, mit einer Antriebsvorrichtung 19 während einer Geradeausfahrt entlang eines landwirtschaftlichen Feldes 4.

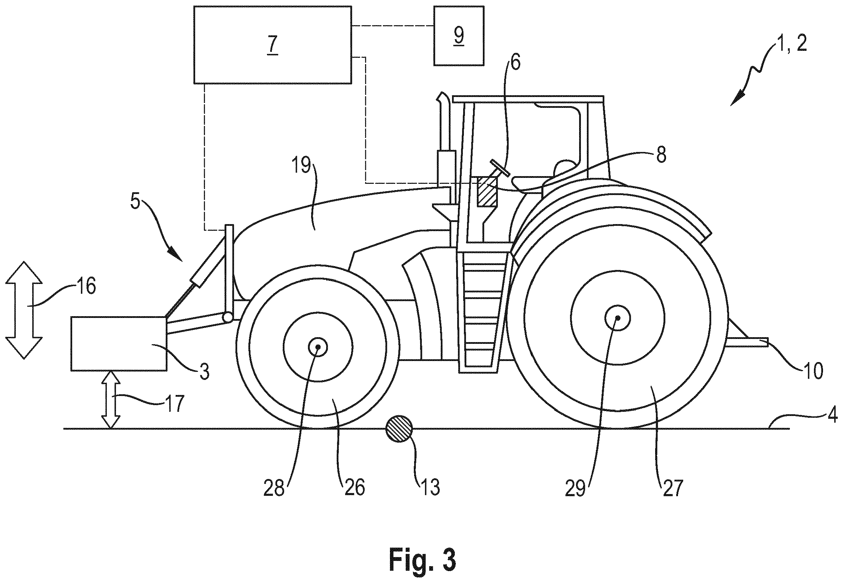

Die landwirtschaftliche Arbeitsmaschine 1 weist zwei Fronträder 26 und zwei Hinterräder 27 auf, wobei sich die Fronträder 27 drehbar bezüglich einer frontseitigen Drehachse 28 gelagert sind und sich während einer Fahrt landwirtschaftlichen Arbeitsmaschine 1 um diese frontseitige Drehachse 28 drehen, während die Hinterräder 27 drehbar bezüglich einer hinterseitigen Drehachse 29 gelagert sind und sich während einer Fahrt landwirtschaftlichen Arbeitsmaschine 1 um diese hinterseitige Drehachse 29 drehen. Die frontseitigen Drehachse 27 und hinterseitige Drehachse 28 sind beispielhaft in der Fig. 3 angedeutet.

Die Fronträder 26 und/oder die Hinterräder 27 können jeweils als Rundreifen ausgebildet sein. Die Fronträder 26 und/oder die Hinterräder 27 können jeweils als Lenkräder ausgebildet sein, die um eine zumindest im Wesentlichen vertikale Lenkachse relativ zu den übrigen Komponenten und/oder Bauteilen der landwirtschaftlichen Arbeitsmaschine verschwenkbar sind.

Die landwirtschaftliche Arbeitsmaschine 1 weist ein frontseitiges Anbaugerät 3 zur Bearbeitung des landwirtschaftlichen Feldes 4 auf. In der Fig. 1 ist das frontseitige Anbaugerät 3 auf dem landwirtschaftlichen Feld 4 auffliegend und bearbeitet das landwirtschaftliche Feld 4. Das frontseitige Anbaugerät 3 kann beispielsweise ein Frontpacker sein, der beispielsweise bei einer Aussaat auf gepflügtem Ackerland in einer Schwimmstellung eingesetzt wird. Ferner weist die landwirtschaftliche Arbeitsmaschine 1 zwei heckseitige Anbaugeräte 11, 12 zur Bearbeitung des landwirtschaftlichen Feldes 4 auf. In der Fig. 1 sind die heckseitigen Anbaugeräte 11, 12 auf dem landwirtschaftlichen Feld 4 auffliegend und bearbeiten das landwirtschaftliche Feld 4.

Die landwirtschaftliche Arbeitsmaschine weist ein Fronthubwerk 5 zur Höhenpositionierung des frontseitigen Anbaugerätes 3 bezüglich des landwirtschaftlichen Feldes 4 auf. Das Fronthubwerk 5 ist als hydraulisches Fronthubwerk ausgebildet. Dieses hydraulische Fronthubwerk 5 ist als hydraulischer Dreipunkt-Kraftheber ausgebildet und weist wenigstens einen Hydraulikzylinder, insbesondere wenigstens zwei Hydraulikzylinder, auf. Das Fronthubwerk 5, insbesondere die Hydraulikzylinder des Fronthubwerkes 5, sind frontseitig bezüglich der frontseitigen Drehachse 28 der Fronträder 26 der landwirtschaftlichen Arbeitsmaschine 1 angeordnet.

Ferner weist die landwirtschaftliche Arbeitsmaschine 1 wenigstens ein Heckhubwerk 10 zur Höhenpositionierung des wenigstens einen heckseitigen Anbaugerätes 11, 12 bezüglich des landwirtschaftlichen Feldes 4 auf. Das Heckhubwerk 10 ist als hydraulisches Heckhubwerk ausgebildet. Dieses hydraulische Heckhubwerk 10 ist als hydraulischer Dreipunkt-Kraftheber ausgebildet und weist einen Hydraulikzylinder, insbesondere wenigstens zwei Hydraulikzylinder, auf. Das Heckhubwerk 10, insbesondere die Hydraulikzylinder des Heckhubwerkes 10, sind heckseitig bezüglich der hinterseitigen Drehachse 29 der Hinterräder 27 der landwirtschaftlichen Arbeitsmaschine 1 angeordnet. Die Begriffe frontseitig und/oder hinterseitig können sich auf die Fahrrichtung 15 der landwirtschaftlichen Arbeitsmaschine 1 beziehen.

Die landwirtschaftliche Arbeitsmaschine 1 weist eine Lenkvorrichtung 6 zur Fahrtrichtungslenkung der landwirtschaftlichen Arbeitsmaschine 1 auf. Diese Lenkvorrichtung kann in einer Fahrerkabine der landwirtschaftlichen Arbeitsmaschine 1 angeordnet sein, mit der eine Lenkstellung durch einen Fahrer 14 der landwirtschaftlichen Arbeitsmaschine 1 bewirkt werden kann. Die landwirtschaftliche Arbeitsmaschine 1 kann derart ausgebildet und/oder programmiert sein, dass in Abhängigkeit der Lenkeinstellung der Lenkvorrichtung 6 wenigstens ein oder mehrere Lenkräder 26, 27 der landwirtschaftlichen Arbeitsmaschine, um eine zumindest im Wesentlichen vertikale Lenkachse relativ zu den übrigen Komponenten und/oder Bauteilen der landwirtschaftlichen Arbeitsmaschine 1 verschränkt wird. Die vertikale Lenkachse kann im Wesentlichen senkrecht zur Fahrrichtung 1 ausgerichtet sein.

Die erfindungsgemäße landwirtschaftliche Arbeitsmaschine 1 ist zur Höhenpositionierung des fronseitigen Anbaugerätes 3 mittels des Fronthubwerks 5 und/oder eines der heckseitigen Anbaugeräte 11, 12 mittels des Heckhubwerks 10 ausgebildet und/oder programmiert.

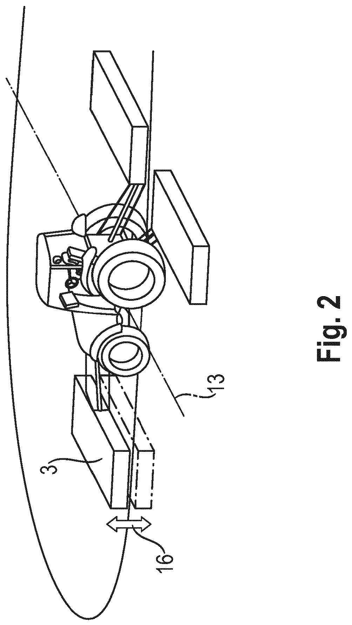

Wie in der Fig. 2 dargestellt, kann die landwirtschaftliche Arbeitsmaschine 1 wenigstens eine Steuervorrichtung 7 zur Steuerung und/oder Regelung des Fronthubwerks 5 und/oder des Heckhubwerks 10 aufweisen. Ferner weist die landwirtschaftliche Arbeitsmaschine 1 wenigstens eine Sensorvorrichtung 8 zur Erfassung der Lenkstellung der Lenkvorrichtung 6 auf, wobei die Sensorvorrichtung 8 zur Erfassung der Lenkstellung der Lenkvorrichtung 6 ausgebildet und/oder programmiert ist. Die Steuervorrichtung 7 ist zur Steuerung und/oder Regelung der Höhenpositionierung des Anbaugerätes 3 mittels des Fronthubwerks 5 in Abhängigkeit der von der Sensorvorrichtung 8 erfassten Lenkstellung der Lenkvorrichtung 6 ausgebildet und/oder programmiert. Die Steuervorrichtung 7 kann kommunizierend mit der Sensorvorrichtung 8 und kommunizierend mit dem Fronthubwerk 5 verbunden sein.

Mit Bezug auf die Fig. 1, 2 und 3 wird beispielsweise der Vorteil der landwirtschaftlichen Arbeitsmaschine 1 dargestellt. In der Fig. 1 befindet sich die landwirtschaftlichen Arbeitsmaschine 1 in einer Geradeausfahrt entlang der Fahrrichtung 15, wobei das frontseitige Anbaugerät 3 auf dem landwirtschaftlichen Feld 4 aufliegt. Mit dem Bezugszeichen 13 ist symbolisch ein Lenkwinkeländerungspunkt in den Fig. 1, 2 und 3 dargestellt. Mit anderen Worten ausgedrückt, weicht die landwirtschaftliche Arbeitsmaschine 1 ab diesem Lenkwinkeländerungspunkt von einer Geradeausfahrt entlang der Fahrrichtung 15 ab, sodass eine Kurvenfahrt, also einer nicht geradlinig-förmigen Fahrt, erfolgt. Wie in den Fig. 2 und Fig. 3 angedeutet ist, weist das frontseitige Anbaugerät 3 eine Bodenbeabstandung 17, insbesondere parallel zur Höhenrichtung 16, auf. Diese Bodenbeabstandung 17 des frontseitige Anbaugerätes 3 wurde durch die landwirtschaftliche Arbeitsmaschine 1 in Abhängigkeit des Lenkungswinkels 18 der Lenkvorrichtung 6 eingestellt. Dies hat beispielsweise den Vorteil, dass das frontseitige Anbaugerät 3 bei einer Kurvenfahrt in automatisierter Form von der landwirtschaftlichen Fläche 4 beabstandet wird, sodass der Kurvenradius nicht nachteilig aufgrund der mechanischen Wechselwirkung des frontseitigen Anbaugerätes 3 mit der landwirtschaftlichen Fläche 4 vergrößert wird. Dies hat auch den Vorteil, dass die landwirtschaftliche Arbeitsmaschine 1 unabhängig von der Aufmerksamkeit des Fahrers 14 stets eine Kurvenfahrt mit einem optimalen Kurvenradius, insbesondere einem möglichst kleinen Kurvenradius, ermöglicht.

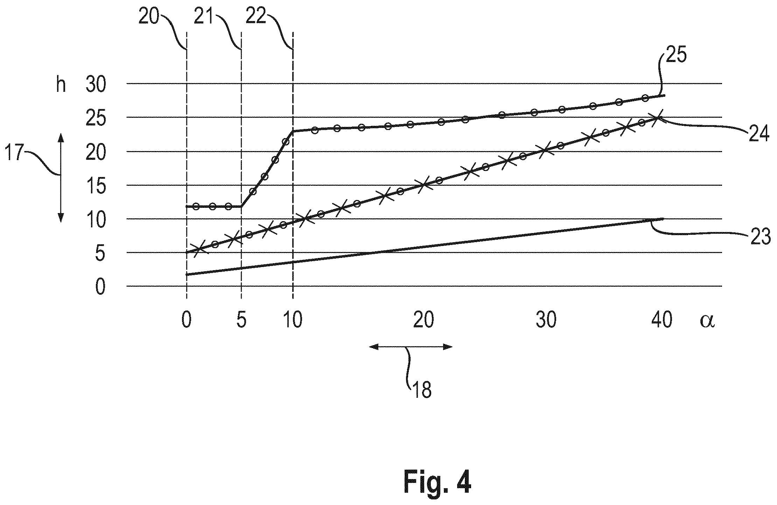

Die Steuervorrichtung 7 ist dazu ausgebildet und/oder programmiert, in Abhängigkeit der von der Sensorvorrichtung 8 erfassten Lenkstellung der Lenkvorrichtung 6 wenigstens abschnittweise mittels wenigstens einer Funktion eine einzustellende Höhenposition des Anbaugerätes 3 zu ermitteln und das Fronthubwerk 5 in Abhängigkeit dieser ermittelten Höhenposition derart ansteuern und/oder regeln, dass das Anbaugerät 3 die ermittelte Höhenposition einnimmt. Solche Funktionen sind beispielhaft in der Fig. 4 dargestellt.

Die Fig. 4 zeigt beispielhaft ein erstes Winkel-Höhenverhältnis 23 und ein zweites Winkel-Höhenverhältnis 24 in Form linearer Funktionen. Eine lineare Funktion zur Ermittlung der einzustellenden Höhenposition h des Anbaugerätes $h \left(\left|α\right|\right) = m ∗ \left|α\right| + n$ kann von der erfassten Lenkstellung, insbesondere dem erfassten Lenkwinkel α, einer Steigung m und einem Offset n abhängen. Hierbei hängen insbesondere die Steigung m und der Offset *n* von der Art des Anbaugerätes und/oder der Art der Landwirtschaftliche Arbeitsmaschine und/oder der Art des landwirtschaftlichen Feldes ab. Beispielhaft kann das erste Winkel-Höhenverhältnis 23 für ein erstes Anbaugerät und das zweite Winkel-Höhenverhältnis 24 für ein zweites Anbaugerät gelten, wobei das erste Anbaugerät ungleich dem zweiten Anbaugerät ausgebildet ist. In der Fig. 4 kann die einzustellenden Höhenposition h in cm und der Lenkwinkel α in Grad angegeben sein kann.

Die Fig. 4 zeigt beispielhaft ein drittes Winkel-Höhenverhältnis 25. Die die Steuervorrichtung 7 ist dazu ausgebildet und/oder programmiert, dass die wenigstens eine Funktion eine erste lineare Funktion mit einer ersten Steigung und eine zweite lineare Funktion mit einer zweiten Steigung aufweist, wobei die erste Steigung ungleich der zweiten Steigung ist, wobei bei einer erfassten Lenkstellung der Lenkvorrichtung 6, die kleiner ist als ein Grenzwert 22, die erste lineare Funktion zur Ermittlung der einzustellenden Höhenposition des Anbaugerätes 3 verwendet wird, wobei bei einer erfassten Lenkstellung der Lenkvorrichtung 6, die gleich und/oder oberhalb des Grenzwertes 22 ist, die zweite lineare Funktion zur Ermittlung der einzustellenden Höhenposition des Anbaugerätes 3 verwendet wird. Hierbei ist die erste Steigung größer als die zweite Steigung.

Ferner ist die Steuervorrichtung 7 dazu ausgebildet und/oder programmiert, dass bei einer erfassten Lenkstellung der Lenkvorrichtung 6, die kleiner als ein Toleranzwert 21 ist, die Höhenposition des Anbaugerätes 3 konstant gehalten wird. Der Toleranzwert 21 kann beispielsweise 5°, insbesondere 2.5°, sein. Der Toleranzwert kann von der Art des Anbaugerätes und/oder der Art der Landwirtschaftliche Arbeitsmaschine und/oder der Art des landwirtschaftlichen Feldes abhängig sein.

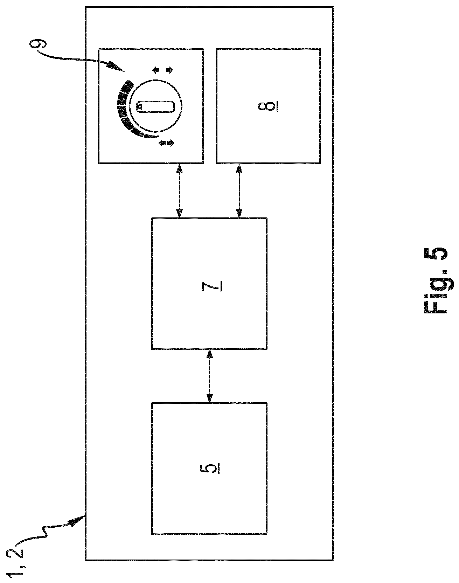

In der Fig. 5 ist schematisch und exemplarisch einen Schaltplan der landwirtschaftlichen Arbeitsmaschine 1 dargestellt. Die Steuervorrichtung 7 kann kommunizierend mit der Sensorvorrichtung 8 und kommunizierend mit dem Fronthubwerk 5 und kommunizierend mit einer Einstellvorrichtung 9 verbunden sein. Die Einstellvorrichtung 9 kann Einstellungselemente aufweisen, die ein Fahrer 14 der landwirtschaftlichen Arbeitsmaschine 1 betätigen kann, um die Einstellung der wenigstens einen Funktion, insbesondere die Steigung der wenigstens einen linearen Funktion, und/oder des Grenzwertes und/oder des Toleranzwertes durchzuführen.

### Bezugszeichenliste

- 1: Landwirtschaftliche Arbeitsmaschine
- 2: Traktor
- 3: Fronseitiges Anbaugerät
- 4: landwirtschaftliches Feld
- 5: Fronthubwerk
- 6: Lenkvorrichtung
- 7: Steuervorrichtung
- 8: Sensorvorrichtung
- 9: Einstellvorrichtung
- 10: Heckhubwerk
- 11: Heckseitiges Anbaugerät
- 12: Heckseitiges Anbaugerät
- 13: Lenkwinkeländerungspunkt
- 14: Fahrer
- 15: Fahrrichtung
- 16: Höhenrichtung
- 17: Bodenbeabstandung
- 18: Lenkwinkel
- 19: Antriebsvorrichtung
- 20: Geradeausfahrt
- 21: Toleranzwert
- 22: Grenzwert
- 23: Erstes Winkel-Höhenverhältnis
- 24: Zweites Winkel-Höhenverhältnis
- 25: Drittes Winkel-Höhenverhältnis
- 26: Frontrad
- 27: Hinterrad
- 28: Frontseitige Drehachse
- 29: Hinterseitige Drehachse

## Patentansprüche

1. Landwirtschaftliche Arbeitsmaschine (1), insbesondere ein Traktor (2),
- mit einem Anbaugerät (3) zur Bearbeitung eines landwirtschaftlichen Feldes (4),
- mit einem Fronthubwerk (5) zur Höhenpositionierung des Anbaugerätes (3) bezüglich des landwirtschaftlichen Feldes (4),
- mit einer Lenkvorrichtung (6) zur Fahrtrichtungslenkung der landwirtschaftlichen Arbeitsmaschine (1),
wobei die landwirtschaftliche Arbeitsmaschine (1) zur Höhenpositionierung des Anbaugerätes (3) mittels des Fronthubwerks (5) in Abhängigkeit einer Lenkstellung der Lenkvorrichtung (6) ausgebildet und/oder programmiert ist,
**dadurch gekennzeichnet,**
- **dass** die landwirtschaftliche Arbeitsmaschine (1) wenigstens ein heckseitiges Anbaugerät (11, 12) zur Bearbeitung des landwirtschaftlichen Feldes (4) und wenigstens ein Heckhubwerk (10) zur Höhenpositionierung des wenigstens einen heckseitigen Anbaugerätes (11, 12) bezüglich des landwirtschaftlichen Feldes (4) aufweist,
- und **dass** die landwirtschaftliche Arbeitsmaschine (1) zur Höhenpositionierung des wenigstens einen heckseitigen Anbaugerätes (11, 12) mittels des Heckhubwerks (10) in Abhängigkeit der Lenkstellung der Lenkvorrichtung (6) ausgebildet und/oder programmiert ist.

2. Landwirtschaftliche Arbeitsmaschine (1) nach Anspruch 1,
**dadurch gekennzeichnet,**
- **dass** die landwirtschaftliche Arbeitsmaschine (1) wenigstens eine Steuervorrichtung (7) zur Steuerung und/oder Regelung des Fronthubwerks (5) und wenigstens eine Sensorvorrichtung (8) zur Erfassung der Lenkstellung der Lenkvorrichtung (6) aufweist,
- wobei die Sensorvorrichtung (8) zur Erfassung der Lenkstellung der Lenkvorrichtung (6) ausgebildet und/oder programmiert ist,
- wobei die Steuervorrichtung (7) zur Steuerung und/oder Regelung der Höhenpositionierung des Anbaugerätes (3) mittels des Fronthubwerks (5) in Abhängigkeit der von der Sensorvorrichtung (8) erfassten Lenkstellung der Lenkvorrichtung (6) ausgebildet und/oder programmiert ist.

3. Landwirtschaftliche Arbeitsmaschine (1) nach Anspruch 2,
**dadurch gekennzeichnet,**
**dass** die Sensorvorrichtung (8) dazu ausgebildet und/oder programmiert ist, die Lenkstellung der Lenkvorrichtung (6) in Form eines Lenkwinkels (18) zu ermitteln.

4. Landwirtschaftliche Arbeitsmaschine (1) nach Anspruch 2 oder 3,
**dadurch gekennzeichnet,**
**dass** die Steuervorrichtung (7) dazu ausgebildet und/oder programmiert ist, in Abhängigkeit der von der Sensorvorrichtung (8) erfassten Lenkstellung der Lenkvorrichtung (6) wenigstens abschnittweise mittels wenigstens einer Funktion eine einzustellende Höhenposition des Anbaugerätes (3) zu ermitteln und das Fronthubwerk (5) in Abhängigkeit dieser ermittelten Höhenposition derart ansteuern und/oder regeln, dass das Anbaugerät (3) die ermittelte Höhenposition einnimmt.

5. Landwirtschaftliche Arbeitsmaschine (1) nach Anspruch 4,
**dadurch gekennzeichnet,**
**dass** wenigstens eine Funktion eine lineare Funktion mit einer Steigung ist.

6. Landwirtschaftliche Arbeitsmaschine (1) nach Anspruch 4 oder 5,
**dadurch gekennzeichnet,**
- **dass** die wenigstens eine Funktion eine erste lineare Funktion mit einer ersten Steigung und eine zweite lineare Funktion mit einer zweiten Steigung aufweist,
- wobei die erste Steigung ungleich der zweiten Steigung ist,
- wobei bei einer erfassten Lenkstellung der Lenkvorrichtung (6), die kleiner ist als ein Grenzwert (22), die erste lineare Funktion zur Ermittlung der einzustellenden Höhenposition des Anbaugerätes (3) verwendet wird,
- wobei bei einer erfassten Lenkstellung der Lenkvorrichtung (6), die gleich und/oder oberhalb des Grenzwertes (22) ist, die zweite lineare Funktion zur Ermittlung der einzustellenden Höhenposition des Anbaugerätes (3) verwendet wird.

7. Landwirtschaftliche Arbeitsmaschine (1) nach einem der Ansprüche 4 bis 6,
**dadurch gekennzeichnet,**
**dass** die Steuervorrichtung (7) dazu ausgebildet und/oder programmiert ist, dass bei einer erfassten Lenkstellung der Lenkvorrichtung (6), die kleiner als ein Toleranzwert (21) ist, die Höhenposition des Anbaugerätes (3) konstant gehalten wird.

8. Landwirtschaftliche Arbeitsmaschine (1) nach Anspruch 7,
**dadurch gekennzeichnet,**
**dass** der Toleranzwert (21) ungleich und kleiner als der Grenzwert (22) ist.

9. Landwirtschaftliche Arbeitsmaschine (1) nach einem der Ansprüche 4 bis 8,
**dadurch gekennzeichnet,**
**dass** die Steuervorrichtung (7) dazu ausgebildet und/oder programmiert ist, dass wenigstens die eine Funktion, insbesondere wenigstens die Steigung einer linearen Funktion, und/oder der Grenzwert (22) und/oder der Toleranzwert (21), einstellbar ist.

10. Landwirtschaftliche Arbeitsmaschine (1) nach Anspruch 9,
**dadurch gekennzeichnet,**
**dass** die landwirtschaftliche Arbeitsmaschine (1) eine Einstellvorrichtung (9) zur Einstellung der wenigstens einen Funktion, insbesondere der Steigung der wenigstens einen linearen Funktion, und/oder des Grenzwertes (22) und/oder des Toleranzwertes (21) aufweist.

11. Landwirtschaftliche Arbeitsmaschine (1) nach Anspruch 10,
**dadurch gekennzeichnet,**
**dass** die Einstellvorrichtung (9) Einstellungselemente aufweist, die ein Fahrer (14) der landwirtschaftlichen Arbeitsmaschine (1) betätigen kann, um die Einstellung der wenigstens einen Funktion, insbesondere die Steigung der wenigstens einen linearen Funktion, und/oder des Grenzwertes (22) und/oder des Toleranzwertes (21) durchzuführen.

12. Landwirtschaftliche Arbeitsmaschine (1) nach Anspruch 10 oder 11,
**dadurch gekennzeichnet,**
- **dass** die Einstellvorrichtung (9) dazu ausgebildet und/oder programmiert ist, eine kommunizierende Verbindung mit einer außerhalb der landwirtschaftliche Arbeitsmaschine (1) ausgebildeten Vorrichtung zu bewirken,
- wobei die außerhalb der landwirtschaftliche Arbeitsmaschine (1) ausgebildete Vorrichtung zur Einstellung der wenigstens einen Funktion, insbesondere der Steigung wenigstens einer linearen Funktion, und/oder des Grenzwertes (22) und/oder des Toleranzwertes (21) ausgebildet und/oder programmiert ist.

13. Verfahren zur Höhenpositionierung eines Anbaugerätes (3) einer landwirtschaftlichen Arbeitsmaschine (1) nach einem der Ansprüche 1 bis 12,
wobei die Höhenpositionierung des Anbaugerätes (3) mittels des Fronthubwerks (5) in Abhängigkeit der Lenkstellung der Lenkvorrichtung (6) durchgeführt wird,
**dadurch gekennzeichnet,**
**dass** die Höhenpositionierung eines heckseitigen Anbaugerätes (11, 12) mittels des Heckhubwerks (10) in Abhängigkeit der Lenkstellung der Lenkvorrichtung (6) durchgeführt wird.

## Claims

1. Agricultural working machine (1), in particular a tractor (2),
- having an attachment (3) for working an agricultural field (4),
- having a front lifting mechanism (5) for the height positioning of the attachment (3) in relation to the agricultural field (4),
- having a steering device (6) for steering the direction of travel of the agricultural working machine (1),
wherein the agricultural working machine (1) is designed and/or programmed for the height positioning of the attachment (3) by means of the front lifting mechanism (5) depending on a steering position of the steering device (6), **characterized**
- **in that** the agricultural working machine (1) has at least one rear-mounted attachment (11, 12) for working the agricultural field (4), and at least one rear lifting mechanism (10) for the height positioning of the at least one rear-mounted attachment (11, 12) in relation to the agricultural field (4),
- and **in that** the agricultural working machine (1) is designed and/or programmed for the height positioning of the at least one rear-mounted attachment (11, 12) by means of the rear lifting mechanism (10) depending on the steering position of the steering device (6).

2. Agricultural working machine (1) according to Claim 1,
**characterized**
- **in that** the agricultural working machine (1) has at least one control device (7) for controlling and/or regulating the front lifting mechanism (5), and at least one sensor device (8) for detecting the steering position of the steering device (6),
- wherein the sensor device (8) is designed and/or programmed to detect the steering position of the steering device (6),
- wherein the control device (7) is designed and/or programmed to control and/or regulate the height positioning of the attachment (3) by means of the front lifting mechanism (5) depending on the steering position of the steering device (6) that is detected by the sensor device (8).

3. Agricultural working machine (1) according to Claim 2,
**characterized**
**in that** the sensor device (8) is designed and/or programmed to determine the steering position of the steering device (6) in the form of a steering angle (18).

4. Agricultural working machine (1) according to Claim 2 or 3,
**characterized**
**in that** the control device (7) is designed and/or programmed to determine a height position of the attachment (3) to be set at least in some sections by means of at least one function, depending on the steering position of the steering device (6) that is detected by the sensor device (8), and to control and/or regulate the front lifting mechanism (5) depending on this determined height position in such a way that the attachment (3) takes up the determined height position.

5. Agricultural working machine (1) according to Claim 4,
**characterized**
**in that** at least one function is a linear function with a gradient.

6. Agricultural working machine (1) according to Claim 4 or 5,
**characterized**
- **in that** the at least one function has a first linear function with a first gradient and a second linear function with a second gradient,
- wherein the first gradient is not equal to the second gradient,
- wherein, when a steering position of the steering device (6) that is less than a limit value (22) is detected, the first linear function is used to determine the height position of the attachment (3) to be set,
- wherein, when a steering position of the steering device (6) that is equal to and/or above the limit value (22) is detected, the second linear function is used to determine the height position of the attachment (3) to be set.

7. Agricultural working machine (1) according to one of Claims 4 to 6,
**characterized**
**in that** the control device (7) is designed and/or programmed to keep the height position of the attachment (3) constant in the event of a detected steering position of the steering device (6) that is less than a tolerance value (21).

8. Agricultural working machine (1) according to Claim 7,
**characterized**
**in that** the tolerance value (21) is not equal to and is less than the limit value (22).

9. Agricultural working machine (1) according to one of Claims 4 to 8,
**characterized**
**in that** the control device (7) is designed and/or programmed in order for at least the one function, in particular at least the gradient of a linear function and/or the limit value (22) and/or the tolerance value (21), to be adjustable.

10. Agricultural working machine (1) according to Claim 9,
**characterized**
**in that** the agricultural working machine (1) has an adjusting device (9) for adjusting the at least one function, in particular the gradient of the at least one linear function and/or the limit value (22) and/or the tolerance value (21).

11. Agricultural working machine (1) according to Claim 10,
**characterized**
**in that** the adjusting device (9) has adjustment elements which a driver (14) of the agricultural working machine (1) can actuate in order to carry out the adjustment of the at least one function, in particular the gradient of the at least one linear function and/or the limit value (22) and/or the tolerance value (21).

12. Agricultural working machine (1) according to Claim 10 or 11,
**characterized**
- **in that** the adjusting device (9) is designed and/or programmed to bring about a communicating connection with a device formed outside the agricultural working machine (1),
- wherein the device formed outside the agricultural working machine (1) is designed and/or programmed to adjust the at least one function, in particular the gradient of at least one linear function and/or the limit value (22) and/or the tolerance value (21).

13. Method for the height positioning of an attachment (3) of an agricultural working machine (1) according to one of Claims 1 to 12,
wherein the height positioning of the attachment (3) is carried out by means of the front lifting mechanism (5) depending on the steering position of the steering device (6),
**characterized**
**in that** the height positioning of a rear-mounted attachment (11, 12) is carried out by means of the rear lifting mechanism (10) depending on the steering position of the steering device (6).

## Revendications

1. Machine de travail agricole (1), en particulier tracteur (2),
- avec un accessoire (3) pour le travail d'un champ agricole (4),
- avec un mécanisme de levage avant (5) pour le positionnement en hauteur de l'accessoire (3) par rapport au champ agricole (4),
- avec un dispositif de direction (6) pour diriger le sens de marche de la machine de travail agricole (1), la machine de travail agricole (1) étant formée et/ou programmée pour le positionnement en hauteur de l'accessoire (3) au moyen du mécanisme de levage avant (5) en fonction d'une position de direction du dispositif de direction (6), **caractérisée en ce**
- **que** la machine de travail agricole (1) comporte au moins un accessoire côté arrière (11, 12) pour le travail du champ agricole (4) et au moins un mécanisme de levage arrière (10) pour le positionnement en hauteur de l'au moins un accessoire côté arrière (11, 12) par rapport au champ agricole (4),
- et **que** la machine de travail agricole (1) est formée et/ou programmée pour le positionnement en hauteur de l'au moins un accessoire côté arrière (11, 12) au moyen du mécanisme de levage arrière (10) en fonction de la position de direction du dispositif de direction (6).

2. Machine de travail agricole (1) selon la revendication 1,
**caractérisée en ce**
- **que** la machine de travail agricole (1) comporte au moins un dispositif de commande (7) pour commander et/ou réguler le mécanisme de levage avant (5) et au moins un dispositif de détection (8) pour détecter la position de direction du dispositif de direction (6),
- le dispositif de détection (8) étant formé et/ou programmé pour détecter la position de direction du dispositif de direction (6),
- le dispositif de commande (7) étant formé et/ou programmé pour commander et/ou réguler le positionnement en hauteur de l'accessoire (3) au moyen du mécanisme de levage avant (5) en fonction de la position de direction du dispositif de direction (6) détectée par le dispositif de détection (8).

3. Machine de travail agricole (1) selon la revendication 2,
**caractérisée en ce**
**que** le dispositif de détection (8) est formé et/ou programmé pour déterminer la position de direction du dispositif de direction (6) sous la forme d'un angle de braquage (18).

4. Machine de travail agricole (1) selon la revendication 2 ou 3,
**caractérisée en ce**
**que** le dispositif de commande (7) est formé et/ou programmé pour déterminer, au moins par sections, au moyen d'au moins une fonction, une position en hauteur de l'accessoire (3) à régler en fonction de la position de direction du dispositif de direction (6) détectée par le dispositif de détection (8), et pour piloter et/ou réguler le mécanisme de levage avant (5) en fonction de ladite position en hauteur déterminée de telle manière que l'accessoire (3) prend la position en hauteur déterminée.

5. Machine de travail agricole (1) selon la revendication 4,
**caractérisée en ce**
**qu'**au moins une fonction est une fonction linéaire avec une pente.

6. Machine de travail agricole (1) selon la revendication 4 ou 5,
**caractérisée en ce**
- **que** l'au moins une fonction a une première fonction linéaire avec une première pente et une deuxième fonction linéaire avec une deuxième pente,
- la première pente n'étant pas égale à la deuxième pente,
- la première fonction linéaire étant utilisée pour déterminer la position en hauteur de l'accessoire (3) à régler dans le cas où une position de direction détectée du dispositif de braquage (6) est inférieure à une valeur limite (22),
- la deuxième fonction linéaire étant utilisée pour déterminer la position en hauteur de l'accessoire (3) à régler dans le cas où une position de direction détectée du dispositif de direction (6) est égale et/ou supérieure à la valeur limite (22).

7. Machine de travail agricole (1) selon l'une des revendications 4 à 6,
**caractérisée en ce**
**que** le dispositif de commande (7) est formé et/ou programmé pour maintenir constante la position en hauteur de l'accessoire (3) lorsqu'une position de direction détectée du dispositif de direction (6) est inférieure à une valeur de tolérance (21).

8. Machine de travail agricole (1) selon la revendication 7,
**caractérisée en ce**
**que** la valeur de tolérance (21) n'est pas égale et est inférieure à la valeur limite (22).

9. Machine de travail agricole (1) selon l'une des revendications 4 à 8,
**caractérisée en ce**
**que** le dispositif de commande (7) est formé et/ou programmé pour permettre le réglage d'au moins une fonction, en particulier au moins de la pente d'une fonction linéaire, et/ou de la valeur limite (22) et/ou de la valeur de tolérance (21).

10. Machine de travail agricole (1) selon la revendication 9,
**caractérisée en ce**
**que** la machine de travail agricole (1) comporte un dispositif de réglage (9) pour régler l'au moins une fonction, en particulier la pente de l'au moins une fonction linéaire, et/ou la valeur limite (22) et/ou la valeur de tolérance (21).

11. Machine de travail agricole (1) selon la revendication 10,
**caractérisée en ce**
**que** le dispositif de réglage (9) comporte des éléments de réglage qu'un conducteur (14) de la machine de travail agricole (1) peut actionner pour effectuer le réglage de l'au moins une fonction, en particulier de la pente de l'au moins une fonction linéaire, et/ou de la valeur limite (22) et/ou de la valeur de tolérance (21).

12. Machine de travail agricole (1) selon la revendication 10 ou 11,
**caractérisée en ce**
- **que** le dispositif de réglage (9) est formé et/ou programmé pour établir une liaison de communication avec un dispositif formé à l'extérieur de la machine de travail agricole (1),
- le dispositif formé à l'extérieur de la machine de travail agricole (1) étant formé et/ou programmé pour régler l'au moins une fonction, en particulier la pente d'au moins une fonction linéaire, et/ou la valeur limite (22) et/ou la valeur de tolérance (21).

13. Procédé de positionnement en hauteur d'un accessoire (3) d'une machine de travail agricole (1) selon l'une des revendications 1 à 12,
le positionnement en hauteur de l'accessoire (3) étant réalisé au moyen du mécanisme de levage avant (5) en fonction de la position de direction du dispositif de direction (6),
**caractérisé en ce**
**que** le positionnement en hauteur d'un accessoire côté arrière (11, 12) est réalisé au moyen du mécanisme de levage arrière (10) en fonction de la position de direction du dispositif de direction (6).
